Europäisches Patentamt

European Patent Office

Office européen des brevets

(19)

(11) Publication number: **0 148 371**
A1

# EUROPEAN PATENT APPLICATION

(21) Application number: **84113713.6**

(22) Date of filing: **14.11.84**

(51) Int. Cl.⁴: **B 65 C 9/04**, B 65 G 17/26, B 65 G 17/32

(30) Priority: **05.12.83 IT 364783**

(43) Date of publication of application: **17.07.85** Bulletin 85/29

(84) Designated Contracting States: **DE FR GB NL**

(71) Applicant: **MA.CO ENGINEERING S.r.l., Via d'Azeglio, 15, I-40123 Bologna (IT)**

(72) Inventor: **Risi, Roberto, Via Zampieri 11, I-40033 Casalecchio di Reno Bologna (IT)**

(74) Representative: **Modiano, Guido et al, MODIANO, JOSIF, PISANTY & STAUB Modiano & Associati Via Meravigli, 16, I-20123 Milan (IT)**

(54) Conveyance assembly equipped with devices for holding and rotating objects being conveyed thereon.

(57) The conveyance assembly comprises a conveyor in the form of a pair of flexible looped members (5–8) (closed loop chains), which have two parallel overlapping portions the initial portions whereof are inclined to slightly converge in the direction of advancement. Mounted on the flexible members (5–8) are juxtaposed holder members (15, 16) which, in travelling through the inclined portions, are brought close to the opposite ends of the objects (P) to be conveyed until they engage over and under the same, holding them securely. The holder members are carried rotatably about a common rotation axis and operatively associated with cams (26, 27; 34, 35) which extend along the parallel portions of the flexible members (5–8) and control their rotation.

"CONVEYANCE ASSEMBLY EQUIPPED WITH DEVICES FOR HOLDING AND ROTATING OBJECTS BEING CONVEYED THEREON"

This invention relates to a conveyor equipped with devices for holding and rotating objects being conveyed thereon.

Packaging systems for packaging some articles, in particular containers, frequently require that the containers retain a correct attitude while being advanced, or take a different orientation when proceeding through subsequent processing stations.

Thus, the task of this invention is to provide a conveyor whereby the conveyed objects can be held and rotated.

This task is achieved by a conveyor assembly characterized in that it comprises a conveyor formed of a pair of flexible members having two parallel overlapping portions adapted to move in the direction of advancement of objects to be conveyed, and a plurality of holder members distributed across the flexible members and being controlled to engage substantially at their uppermost and lowermost extent said objects, introduced therebetween by a feeder, said holder members being carried rotatably about a common axis of rotation and operatively associated with cams extending along said parallel portions.

Further features will be more readily understood from the following description of some embodiments of the invention, to be read in conjunction with the accompanying illustrative drawings, where:

Figure 1 is a partly schematical elevation view of the initial portion of a conveyor for cylindrical containers according to this invention;

Figure 2 is an elevation view taken in the plane of line II-II in Figure 1;

Figure 3 is a plan view taken in the plane of line III-III in Figure 2;

Figure 4 is a plan view, similar to Figure 3 but showing the conveyance of a container having an elliptic cross-sectional shape;

Figure 5 is a partly schematical elevation view of the initial portion of a conveyor for flattened containers; and

Figure 6 is a view taken in the plane of line VI-VI in Figure 5.

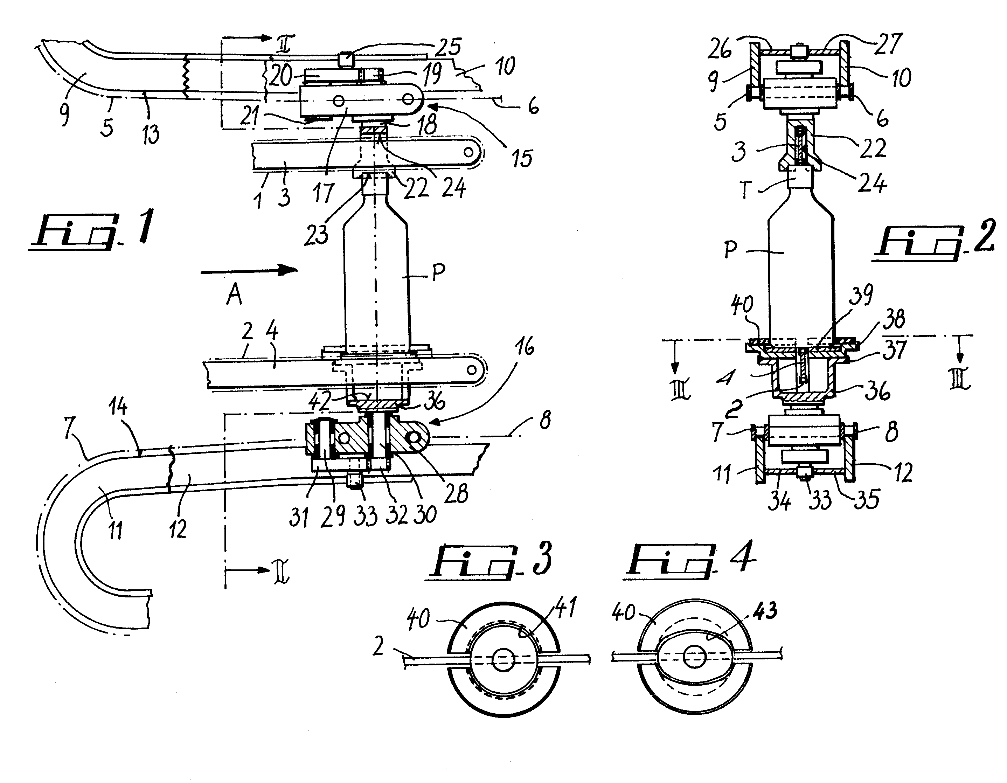

With reference to the embodiment illustrated in Figures 1-3, this conveyor comprises a feeder consisting of two flexible members in the form of two superimposed chains 1,2 lying on a common,vertical plane and shown in dotted lines in Figures 1-5.

The chains 1,2 are arranged to run along respective slideways 3,4, and their lower, and upper runs respectively, extend parallel to each other and are driven concurrently in the direction A.

Located above the chain 1, and below the chain 2, are two additional superimposed flexible members, each of which comprises a pair of closed loop chains, wherein those forming the upper member are indicated at 5,6, and those forming the lower member are indicated at 7,8.

The chain pairs 5,6 and 7,8 are driven along respective parallel slideways 9,10 and 11,12, and their speed of advance is the equal of, and has the same direction as, the chains 1,2.

The slideways 9,10 and 11,12 have initial portions 13,14 which are slightly convergent in the direction of advance and extend above, and below respectively, end portions of the flexible members 1,2 which, however, extend somewhat beyond the point where the flexible members 5-8 begin to extend parallel together.

Carried at regular intervals on the chains 5-8 of the conveyor are pairs of opposed holder members 15 and 16 which cooperate to securely hold therebetween containers which, in the example shown, are cylindrical bottles P closed by a stopper T.

The holder member 15 includes a small block 17 secured between the chains 5 and 6 and having a small shaft 18 mounted thereon for rotation about a vertical axis.

The shaft 18 projects above the block 17, and a pinion gear 19 is keyed thereto which meshes with a gear segment journalled on the block 17 by means of a pivot pin 21.

Beneath the block 17, the shaft 18 carries a holder member rigid therewith which comprises a shank 22 having a bottom socket 23 for engagement with the bottle stopper T. The shank 22 is also formed with a diametrical slot 24 of sufficient width to accommodate the upper flexible member 1.

The gear segment 20, which is offset from the pin 21, carries an idler roller 25 which is constantly engaged in a trough defined between two strips 26, 27 protruding from the slideways 9,10 and forming a cam for controlling the oscillation movement of the gear segment 20.

The underlying holder member 16 likewise comprises a small block 28 having a pivot pin 29 and small shaft 30 journalled therein with a gear segment 31 and respective pinion gear 32 keyed for mutual mesh engagement. An idler roller 33 depends from the gear segment 31 and engages with a cam formed by two strips 34 and 35 attached to the slideways 11 and 12. The shaft 18 and pin 21 are mounted coaxially with the shaft 30 and pin 29, respectively. Furthermore, the gear segment 20 and pinion gear 19 are the like of the gear segment 31 and pinion gear 32.

The shaft 30 extends upwards from the block 16 and has a holder member attached thereto which includes a cup 36 formed with a peripheral flange 37 whereto a washer 38 is attached centrally.

The washer 38 has a disk 39 of a material of the type of a rubber which functions as an abutting pad for a bottle P. Attached to the washer is a ring 40 having a socket 41 of complementary shape to the bottle shape.

The cup 36, washer 38, disk 39, and ring 40 are all provided with a diametrical cut forming a slot 42 adapted to admit the flexible member 2 therein.

It should be noted that the positions of the flexible members 1,2 in the slots 24,42 is such that all the active runs of the chains 1,2 are flush with the bottom of the socket 23 and top surface of the disk 39.

The conveyor described hereinabove operates as follows.

Bottles P, being received between the chains 1,2 and held upright by side walls (not shown but obviously there), are caused to advance in the direction A in timed relationship with the conveyor 5-8, thereby the holder members 15,16 can pick them up therefrom and hold them from above and below.

At the sloping portions 13,14, the slots 24 and 42 will be coplanar with the chains 1 and 2, thereby the shank 22 and cup 36 are overlaid astride the chains, and being brought closer to each other by the oblique pattern of the portions 13,14, will effect the engagement of the bottle top and bottom in the sockets 23 and 41.

At the end of the oblique portions 13,14, the axial forces exerted by the holder members on the opposed ends of the bottle will also lock it against rotation.

As the chains 5-8 move further on, the shank 22 and cup 36 slide out of the flexible members 1,2, thereby the bottles may now be rotated about an axis conducted through the shafts 18,30.

Rotation of the bottles is controlled by the profile of the cams 26,27 and 34,35 which, via the rollers 19,33 will impart on the gear segments 20,31 an oscillatory movement which determines an angular displacement of the pinion gears 19,32 and, hence, of the shank 22 and cup 36, proportionally with the drive ratio between the gear segments and pinion gears and the gear segment oscillation angles.

It should be noted that the conveyor just described can operate with cases or containers of any shapes. Figure 4 shows a modification wherein the ring 40 defines an ellipsoidal socket for receiving containers having a complementary shape bottom.

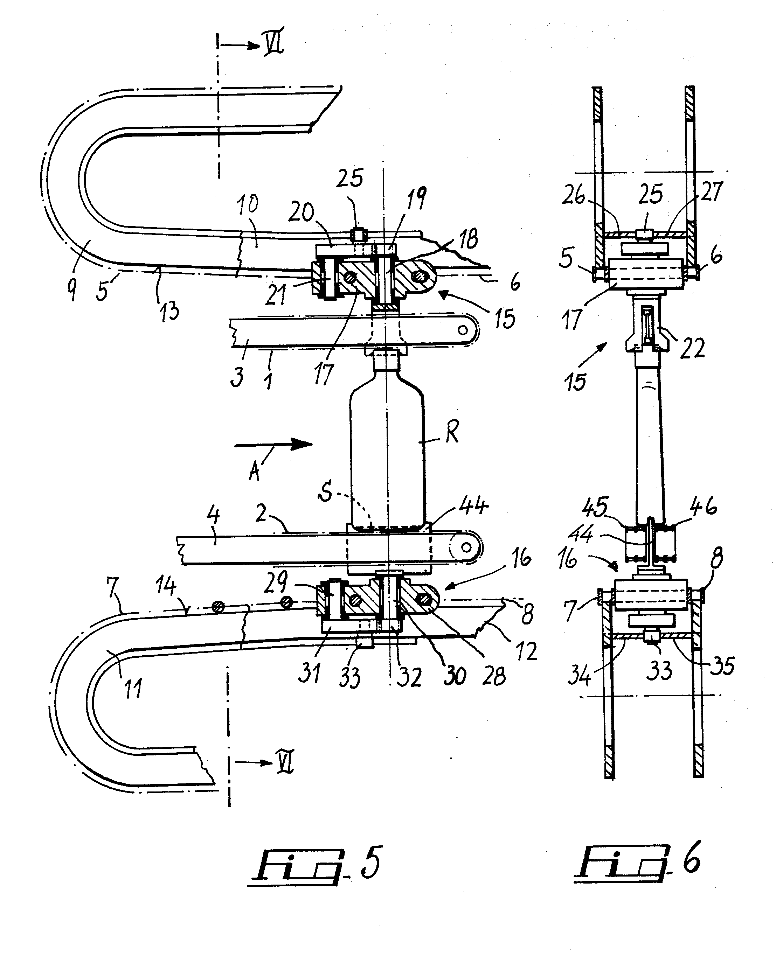

In the instance of containers which already have their bottoms notched or grooved, it may be preferable to use the modification shown in Figures 5,6, where the reference character R designates a container of flattened shape having a bottom provided, along the centerline thereof, with a groove S formed during the container molding stage.

With such a container, while the upper holder member 15 merely requires to have its socket 23 adapted to fit on the stopper, the lower holder member 16 would be provided, instead of the cup 36, with a blade member 44, attached diametrically to the top of the shaft 30 and being effective to penetrate the groove S.

The lower flexible member of the feeder expediently comprises a pair of chains 45,46 which extend along either side of the knife 44 through the sloping path of the slideways 13,14. Otherwise, the conveyor operates in the same way as described previously.

0148371

A further embodiment of the invention provides for the chains 7,8 to extend parallel to the chains 5,6, even at the initial portions 13,14. In this case, the engagement of the holder members 15,16 with the opposed ends of the containers is accomplished by making the holder members themselves, or a part thereof, movable. For example, it would be possible to make the shafts 18,30 axially slidable so as to enable the shank 22 and cup 36 to be mutually shifted by means of linear cams while maintaining the pinion gears 19,32 and gear segments 20,31 in mesh engagement.

The conveyor disclosed herein is specially useful in packaging systems which provide for application of a label on the containers.

Labelling may be carried out on conventional units comprising, for example, a label magazine mounted for oscillation beside the conveyor and arranged to cooperate with a glue applicator. Labels would be picked up by bringing a container into tangential contact with the adhesive side of a label, and then rotating the container, through the cams 26,27 and 34,35, to allow the label to lay over a preset area on the container. One of the main features of the invention is that with this conveyor label application is greatly simplified, and in particular, the problems are eliminated which originate from the centrifugal force acting on the containers processed in conventional systems of the carousel type.

## CLAIMS

1. A conveyance assembly, characterized in that it comprises an object conveyor formed by a pair of flexible members (5-8) having two parallel overlapping portions adapted to move in the direction of advancement of said objects (P), and a plurality of holder members (15,16) distributed across the flexible members and being controlled to engage over and under objects being introduced therebetween by a feeder (1,2), said holder members being carried rotatably about a common axis of rotation (18,30) and operatively associated with cams (26,27;34,35) extending along said parallel portions.

2. A conveyor according to Claim 1, characterized in that each of said flexible members comprises one pair of adjacent closed-loop chains (5,6;7,8) arranged to run along respective parallel and superimposed slideways (9,10;11,12), the initial portions of said slideways (13,14) being arranged convergent in the direction of advancement.

3. A conveyor according to Claim 2, characterized in that said holder members (15;16) comprise a small block (17;28) secured between each of said chain pairs (5,6;7,8), wherein a small shaft (18;30) is supported rotatably which carries at one end one of said holder members (15;16) and at the other end a pinion gear (19;32) meshing with a gear segment (20;31) carried on said block for oscillation, said gear segment having a roller (25;33) mounted thereon to follow a cam (26,27;34,35) extending along said chains.

4. A conveyor according to Claim 3, characterized in that said holder members (15,16) are provided with a socket (23;41) for engagement with the top and bottom extremities of said objects, said socket being formed with a diametrical slot (24;42) wherethrough said object feeder (1,2) is passed.

5. A conveyor according to Claim 1, characterized in that said object feeder comprises two superimposed chains (1,2) lying on a common vertical plane and being arranged to run along slideways (3,4) extending between said converging portions (13,14) of said conveyor (5-8).

6. A conveyor according to Claim 3, characterized in that the holder member engaging the bottom end of said objects comprises a cup member (36) defining at the top a socket, complementary (41) to the object shape.

7. A conveyor according to Claim 3, characterized in that the holder member engaging the bottom end of said objects comprises a blade member (44) for engagement in a groove (S) formed in said object, and that said feeder comprises an upper chain (1) and a pair of adjacent lower chains (45,46) extending beside said blade members.

Fig.1

Fig.2

Fig.3

Fig.4

0148371

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 166 776 (VON HOFE et al.) <br> * Page 1, left-hand column, line 35 - page 2, left-hand column, line 61; figure 1 * <br><br> --- | 1 | B 65 C 9/04 <br> B 65 G 17/26 <br> B 65 G 17/32 |
| A | US-A-2 374 131 (POWELL) <br> * Figures 1-5 * <br><br> --- | 1 | |
| A | DE-A-3 025 178 (ANKER-MASCHINENBAU GMBH) <br> * Page 7, line 3 - page 8, line 12; figure 1 * <br><br> --- | 1 | |
| A | DE-B-2 842 794 (KRONSEDER) <br> * Column 4, line 68 - column 5, line 11; figures 1-3 * <br><br> --- | 1 | TECHNICAL FIELDS SEARCHED (Int. Cl.4) |
| A | DE-A-2 558 230 (ANKER-MASCHINENBAU GMBH) <br><br> --- | | B 65 C 3/00 <br> B 65 C 9/00 <br> B 65 G 17/00 <br> B 65 G 47/00 <br> B 65 G 49/00 <br> B 67 C 3/00 |
| A | DE-A-2 532 698 (PNEUMATIC SCALE CORP.) <br><br> --- | | |
| A | GB-A-2 116 105 (CINCINNATI MILACRON INC.) <br><br> ----- | | |

The present search report has been drawn up for all claims

| Place of search <br> BERLIN | Date of completion of the search <br> 26-02-1985 | Examiner <br> SIMON J J P |
|---|---|---|